# EUROPEAN PATENT APPLICATION

(11) **EP 4 686 122 A1**
(43) Date of publication of application: **28.01.2026**
(21) Application number: 24819472.2
(22) Date of filing: 16.04.2024
(51) Int. Cl.: H04L 1/16

(54) **ELECTRONIC DEVICE FOR ADAPTIVELY PERFORMING AGGREGATION OF MEDIUM ACCESS CONTROL PROTOCOL DATA UNITS (MPDUS)**

(30) Priority: 09.06.2023 KR 20230074274; 11.07.2023 KR 20230089790
(71) Applicant: Samsung Electronics Co., Ltd., Suwon-si, Gyeonggi-do 16677 (KR)
(72) Inventor: YUN, Jusik, Suwon-si, Gyeonggi-do 16677 (KR); KIM, Gibeom, Suwon-si, Gyeonggi-do 16677 (KR); YANG, Changmok, Suwon-si, Gyeonggi-do 16677 (KR); JEONG, Kiyeong, Suwon-si, Gyeonggi-do 16677 (KR); CHO, Siejoon, Suwon-si, Gyeonggi-do 16677 (KR); CHOI, Junsu, Suwon-si, Gyeonggi-do 16677 (KR)
(74) Representative: HGF
(86) International application number: PCT/KR2024/005097
(87) International publication number: WO 2024/253320

(57) **Abstract**

An electronic device according to an embodiment may comprise: one or more wireless communication modules configured to transmit and receive a wireless signal; one or more processors operatively connected to the wireless communication modules; and a memory for storing instructions. The instructions may be individually executed by the processor to cause the electronic device to: receive a first reception response frame on a first link with respect to a first set of data frames transmitted on the first link; receive a second reception response frame on a second link with respect to a second set of data frames transmitted on the second link; determine, on the basis of information included in the first reception response frame and information included in the second reception response frame, whether a first data frame failed to be transmitted or omitted from the first set and a second data frame failed to be transmitted or omitted from the second set overlap each other; and adaptively aggregate the first data frame and the second data frame into a third set of data frames on the basis of whether the first data frame and the second data frame overlap each other.

## Description

### TECHNICAL FIELD

Embodiments of the present disclosure relate to an electronic device for adaptively performing aggregation of medium access control protocol data units (MPDUs).

### BACKGROUND ART

With the advent of electronic devices such as smartphones, tablet personal computers (PCs), and laptops, the demand for high-speed wireless connectivity has exploded. Fueled by this trend and the growing demand for high-speed wireless connectivity, the Institute of Electrical and Electronics Engineers (IEEE) 802.11 wireless communication standard has firmly established itself as a representative and universal high-speed wireless communication standard in the information technology (IT) industry. Early wireless local area network (WLAN) technology, developed around 1997, was able to support transmission speeds of up to 1 to 2 megabits per second (Mbps). Since then, based on the demand for faster wireless connections, WLAN technology has steadily evolved, leading to the development of new WLAN technology that improves transmission speeds, such as IEEE 802.11n, 802.11ac, or 802.11ax. Currently, IEEE 802.11 ax has a maximum transmission speed of several gigabits per second (Gbps).

Today, WLANs provide high-speed wireless connections to users in various public spaces, including offices, airports, stadiums, or stations, in addition to private spaces like homes. Consequently, WLANs have had a significant impact on people's lifestyles and culture, and WLANs have become an integral part of modern life.

### DISCLOSURE OF THE INVENTION

### TECHNICAL SOLUTIONS

According to an embodiment, an electronic device includes at least one wireless communication module configured to transmit and receive a wireless signal. The electronic device includes at least one processor operatively connected to the wireless communication module. The electronic device includes memory storing instructions. The instructions, when executed by the processor individually or collectively, may cause the electronic device to receive a first reception acknowledgment frame over a first link for a first set of data frames transmitted over the first link. The instructions, when executed by the processor individually or collectively, may cause the electronic device to receive a second reception acknowledgment frame over a second link for a second set of data frames transmitted over the second link. The instructions, when executed by the processor individually or collectively, may cause the electronic device to, based on information included in the first reception acknowledgment frame and information included in the second reception acknowledgment frame, determine whether there is an overlap between a first data frame that fails to be transmitted or is dropped from transmission in the first set and a second data frame that fails to be transmitted or is dropped from transmission in the second set. The instructions, when executed by the processor individually or collectively, may cause the electronic device to, based on whether there is the overlap, adaptively aggregate the first data frame and the second data frame into a third set of data frames.

According to an embodiment, an operating method of an electronic device includes receiving a first reception acknowledgment frame over a first link for a first set of data frames transmitted over the first link. The operating method of the electronic device includes receiving a second reception acknowledgment frame over a second link for a second set of data frames transmitted over the second link. The operating method of the electronic device includes, based on information included in the first reception acknowledgment frame and information included in the second reception acknowledgment frame, determining whether there is an overlap between a first data frame that fails to be transmitted or is dropped from transmission in the first set and a second data frame that fails to be transmitted or is dropped from transmission in the second set. The operating method of the electronic device includes, based on whether there is the overlap, adaptively aggregating the first data frame and the second data frame into a third set of data frames.

According to an embodiment, an electronic device includes at least one wireless communication module configured to transmit and receive a wireless signal. The electronic device includes at least one processor operatively connected to the wireless communication module. The electronic device includes memory storing instructions. The instructions, when executed by the processor individually or collectively, may cause the electronic device to receive block acknowledgment (BA) frames respectively over a plurality of links for aggregated medium access control (MAC) protocol data units (A-MPDUs) transmitted respectively over the plurality of links according to a multi-link operation (MLO). The instructions, when executed by the processor individually or collectively, may cause the electronic device to, based on information included in the BA frames, determine MPDUs that fail to be transmitted or are dropped from transmission among MPDUs aggregated respectively into the A-MPDUs. The instructions, when executed by the processor individually or collectively, may cause the electronic device to negotiate, with an external electronic device, an aggregating level of an A-MPDU into which the MPDUs that fail to be transmitted or are dropped from transmission are aggregated.

According to an embodiment, an operating method of an electronic device includes receiving BA frames respectively over a plurality of links for A-MPDUs transmitted respectively over the plurality of links according to an MLO. The operating method of the electronic device includes, based on information included in the BA frames, determining MPDUs that fail to be transmitted or are dropped from transmission from among MPDUs aggregated respectively into the A-MPDUs. The operating method of the electronic device includes negotiating, with an external electronic device, an aggregating level of an A-MPDU into which the MPDUs that fail to be transmitted or are dropped from transmission.

According to an embodiment, an electronic device includes at least one wireless communication module configured to transmit and receive a wireless signal. The electronic device includes at least one processor operatively connected to the wireless communication module. The electronic device includes memory storing instructions. The instructions, when executed by the processor individually or collectively, may cause the electronic device to transmit a first set of data frames over a first link. The instructions, when executed by the processor individually or collectively, may cause the electronic device to transmit a second set of data frames over a second link. The instructions, when executed by the processor individually or collectively, may cause the electronic device to receive a first reception acknowledgment frame corresponding to the first set over the first link. The instructions, when executed by the processor individually or collectively, may cause the electronic device to receive a second reception acknowledgment frame corresponding to the second set over the second link. The instructions, when executed by the processor individually or collectively, may cause the electronic device to, in response to the first reception acknowledgment frame and the second reception acknowledgment frame, transmit a third set of data frames. Each of sequence numbers of the data frames included in the third set may correspond to one of sequence numbers of the data frames included in the first set and sequence numbers of the data frames included in the second set.

According to an embodiment, an operating method of an electronic device includes transmitting a first set of data frames over a first link. The operating method of the electronic device includes transmitting a second set of data frames over a second link. The operating method of the electronic device includes receiving a first reception acknowledgment frame corresponding to the first set over the first link. The operating method of the electronic device includes receiving a second reception acknowledgment frame corresponding to the second set over the second link. The operating method of the electronic device includes, in response to receiving the first reception acknowledgment frame and the second reception acknowledgment frame, transmitting a third set of data frames. Each of sequence numbers of the data frames included in the third set may correspond to one of sequence numbers of the data frames included in the first set and sequence numbers of the data frames included in the second set.

### BRIEF DESCRIPTION OF DRAWINGS

FIGS. 1 and 2 are diagrams illustrating a wireless local area network (WLAN) system according to an embodiment.
FIG. 3 is a diagram illustrating a multi-link device (MLD) according to an embodiment.
FIG. 4 is a diagram illustrating a multi-link operation (MLO) according to an embodiment.
FIG. 5 is a diagram illustrating a physical layer convergence procedure (PLCP) protocol data unit (PPDU).
FIG. 6 is a diagram illustrating a PPDU to which frame aggregation is applied.
FIG. 7 is a diagram illustrating a compressed block acknowledgment (BA) frame.
FIG. 8 is a diagram illustrating transmission efficiency of an aggregated-medium access control protocol data unit (A-MPDU) transmitted over a single link.
FIG. 9 is a diagram illustrating transmission efficiency of A-MPDUs transmitted over multiple links.
FIG. 10 is a schematic block diagram illustrating a non-access point MLD (AP MLD) according to an embodiment.
FIG. 11 is a diagram illustrating an operation of adaptively performing aggregation of an MPDU, according to an embodiment.
FIGS. 12 and 13 are diagrams illustrating an operation of adaptively performing aggregation of MPDUs, according to an embodiment.
FIG. 14 is a diagram illustrating an operation of adaptively performing aggregation of MPDUs, according to an embodiment.
FIGS. 15 to 17 are flowcharts of an operating method of an electronic device, according to an embodiment.
FIG. 18 is a block diagram illustrating an electronic device in a network environment according to an embodiment.

### BEST MODE FOR CARRYING OUT THE INVENTION

Hereinafter, embodiments are described in detail with reference to the accompanying drawings. When describing the embodiments with reference to the accompanying drawings, like reference numerals refer to like elements and a repeated description related thereto is omitted.

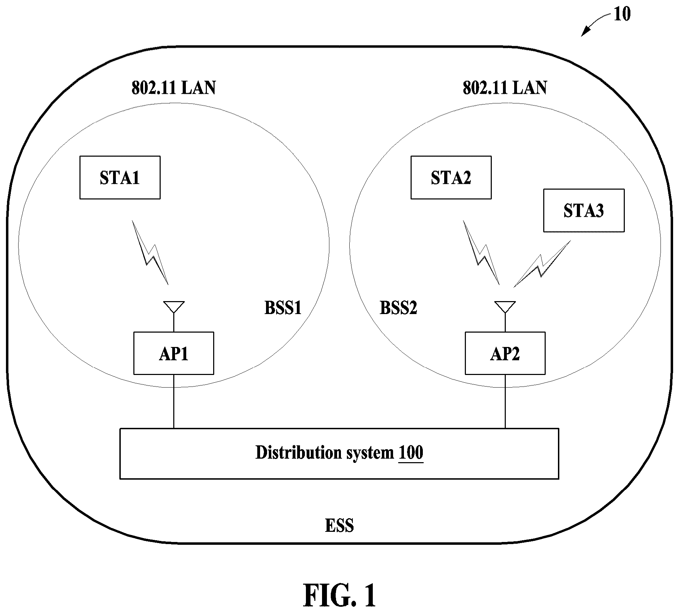

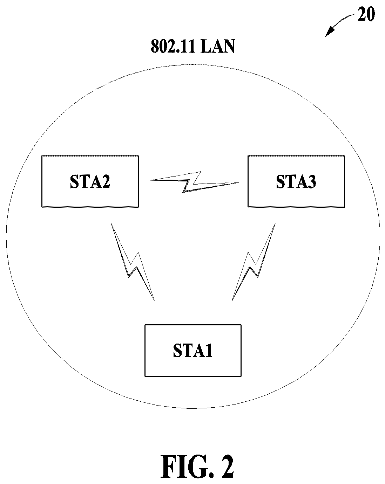

FIGS. 1 and 2 are diagrams illustrating a wireless local area network (WLAN) system according to an embodiment.

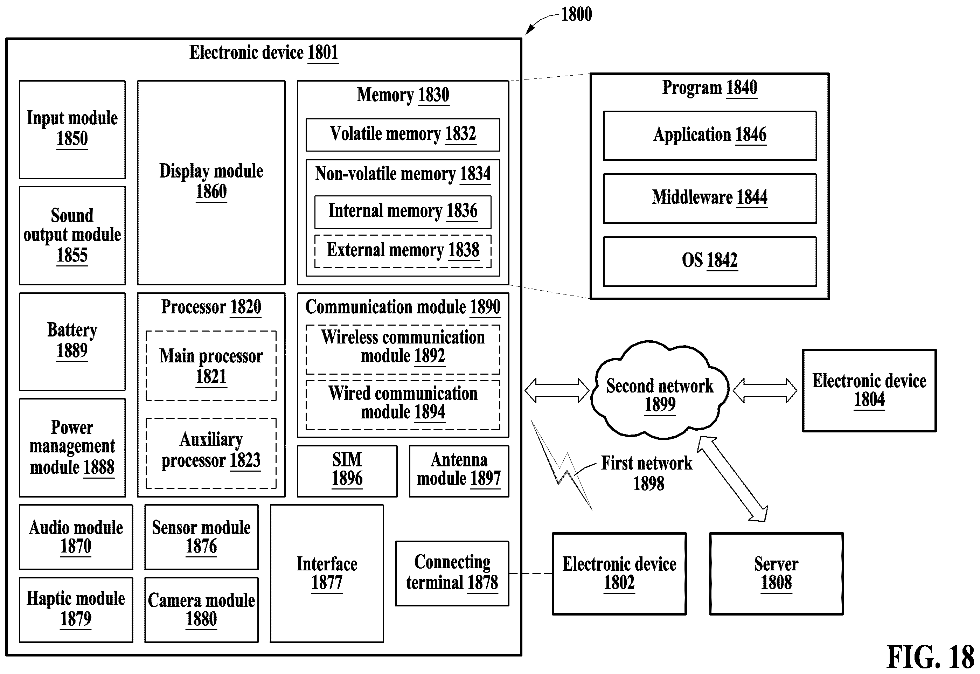

Referring to FIG. 1, according to an embodiment, a WLAN system 10 may be an infrastructure mode in which an access point (AP) is present in a structure of a WLAN of the Institute of Electrical and Electronic Engineers (IEEE) 802.11 standard. The WLAN system 10 may include one or more basic service sets (BSSs) (e.g., BSS1 and BSS2). A BSS (BSS1 or BSS2) may be a set of APs and stations (STAs) (e.g., an electronic device 101, an electronic device 1802, and an electronic device 1804 of FIG. 18) that may communicate with one another by achieving synchronization. BSS1 may include AP1 and STA1, and BSS2 may include AP2, STA2, and STA3.

According to an embodiment, the WLAN system 10 may include at least one STA (STA1 to STA3), a plurality of APs (AP1 and AP2) providing a distribution service, and a distribution system 100 connecting the plurality of APs (AP1 and AP2). The distribution system 100 may implement an extended service set (ESS), which is a service set extended by connecting a plurality of BSSs (e.g., BSS1 and BSS2). The ESS may be used as a term referring to one network in which the plurality of APs (AP1 and AP2) are connected through the distribution system 100. The plurality of APs (AP1 and AP2) included in one ESS may have the same service set identification (SSID).

According to an embodiment, the STA (STA1 to STA3) may be an arbitrary functional medium including a medium access control (MAC) and a physical layer interface for a wireless medium that conform to the provisions of the IEEE 802.11 standard. The term "STA" (STA1 to STA3) may be used to collectively refer to both an AP and a non-AP STA. The STA (e.g., STA1 to STA3) may also be referred to by various names, such as an electronic device, a mobile terminal, a wireless device, a wireless transmit/receive unit (WTRU), user equipment (UE), a mobile station (MS), a mobile subscriber unit, or simply, a user.

Referring to FIG. 2, according to an embodiment, unlike the WLAN system 10 of FIG. 1, a WLAN system 20 may be an ad-hoc mode in which communication is performed by setting a network among a plurality of STAs (STA1 to STA3) without an AP in a WLAN structure of the IEEE 802. 11 standard. The WLAN system 20 may include a BSS operating in an ad-hoc mode, for example, an independent basic service set (IBSS).

According to an embodiment, since the IBSS does not include an AP, there may not be a centralized management entity that performs a management function at a center. In the IBSS, the STAs may be managed in a distributed manner. In the IBSS, all STAs may be mobile STAs, and access to a distribution system may not be allowed, thus, the IBSS may form a self-contained network (or an integrated network).

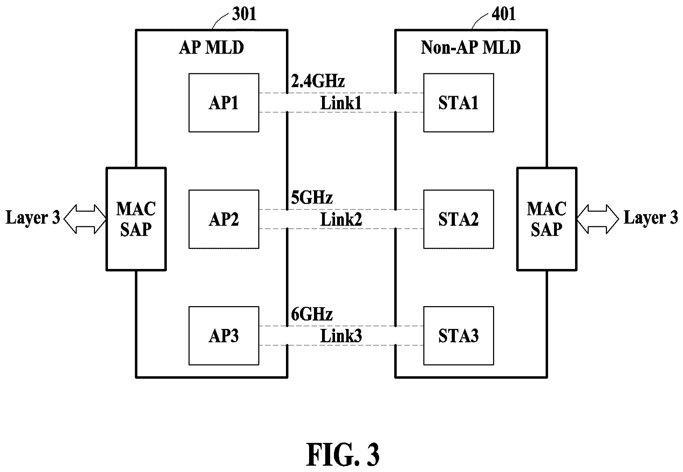

FIG. 3 is a diagram illustrating a multi-link device (MLD) according to an embodiment.

Referring to FIG. 3, according to an embodiment, an AP MLD 301 and a non-AP MLD 401 may perform a multi-link operation (MLO) that communicates using a plurality of individual links (e.g., Link 1, Link 2, and Link 3). The AP MLD 301 may be a device including one or more APs (e.g., AP1, AP2, and AP3). The AP MLD 301 may be a device connected to a logical link control (LLC) layer through one interface (e.g., a MAC service access point (SAP)). The one or more APs (e.g., AP1, AP2, and AP3) included in the AP MLD 301 may share some functions in the MAC layer. The APs in the AP MLD 301 may operate through different links (e.g., AP1 operates through Link 1, AP2 operates through Link 2, and AP3 operates through Link 3). Each of the APs (e.g., AP1, AP2, and AP3) in the AP MLD 301 may be in charge of a corresponding link and may perform the role of an independent AP.

According to an embodiment, the non-AP MLD 401 may be a device including one or more non-APs (e.g., STA1, STA2, and STA3). The non-AP MLD 401 may be a device connected to an LLC layer through one interface (e.g., a MAC SAP). The one or more non-APs (e.g., STA1, STA2, and STA3) included in the non-AP MLD 401 may share some functions in the MAC layer. The STAs in the non-AP MLD 401 may operate through different links (e.g., STA1 operates through Link 1, STA2 operates through Link 2, and STA3 operates through Link 3). Each of the STAs (e.g., STA1, STA2, and STA3) in the non-AP MLD 401 may be in charge of a corresponding link and may perform the role of an independent STA. The non-AP MLD may also be expressed as an STA MLD.

According to an embodiment, when the AP MLD 301 includes a plurality of APs (e.g., AP1, AP2, and AP3), each of the APs (e.g., AP1, AP2, and AP3) may include a separate link (e.g., Link 1, Link 2, and Link 3) and perform a frame transmission and reception operation using each of the STAs (e.g., STA1, STA2, and STA3) included in the non-AP MLD 401 and a plurality of links. A link may utilize a predetermined channel (or bandwidth). For example, each link may operate in the 2.4 gigahertz (GHz), 5 GHz, or 6 GHz band.

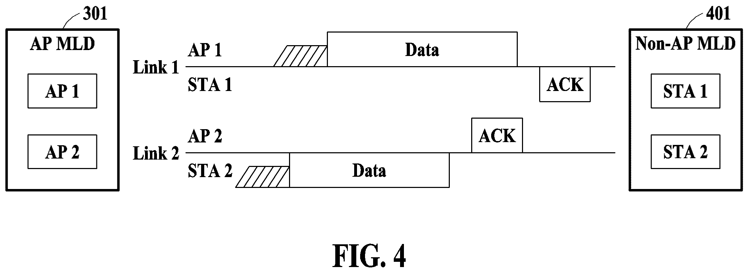

FIG. 4 is a diagram illustrating an MLO according to an embodiment.

Referring to FIG. 4, according to an embodiment, a schematic diagram for communication (e.g., an MLO) between the AP MLD 301 and the non-AP MLD 401 may be identified. The AP MLD 301 and/or the non-AP MLD 401 may transmit uplink data or downlink data through the MLO. The AP MLD 301 may communicate with the non-AP MLD 401 through a plurality of links (e.g., Link 1 and Link 2). STA 1 of the non-AP MLD 401 may communicate with AP 1 of the AP MLD 301 through Link 1. STA 1 of the non-AP MLD 401 may receive data from AP 1 of the AP MLD 301 through Link 1. Link 1 may be a downlink. STA 2 of the non-AP MLD 401 may communicate with AP 2 of the AP MLD 301 through Link 2. STA 2 of the non-AP MLD 401 may transmit data to AP 2 of the AP MLD 301 through Link 2. Link 2 may be an uplink.

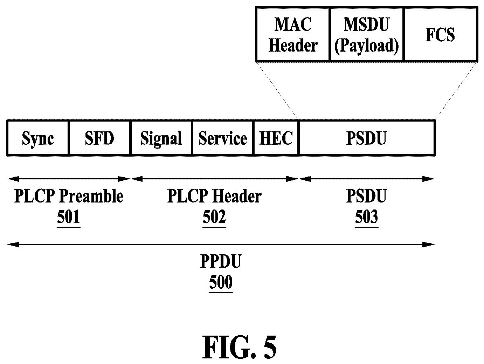

FIG. 5 is a diagram illustrating a physical layer convergence procedure (PLCP) protocol data unit (PPDU).

Referring to FIG. 5, a structure of a PPDU 500 may be identified. The PPDU 500 may be a basic unit of a frame transmitted from a WLAN system of IEEE 802.11. The PPDU 500 may include a PLCP preamble 501, a PLCP header 502, and a PLCP service data unit (PSDU) 503.

The PSDU 503 may include a MAC header, a MAC service data unit (MSDU), and a frame check sequence (FCS). The reason that the PPDU 500 is a basic unit of transmission may be because an FCS field for decoding an error during data transmission is included in every PPDU. Through the FCS field, wireless fidelity (Wi-Fi) devices (e.g., the AP MLD 301 and the non-AP MLD 401 of FIG. 4) may check whether there is an error in the data included in the PPDU 500. Through the FCS field, the Wi-Fi devices (e.g., the AP MLD 301 and the non-AP MLD 401 of FIG. 4) may perform reliable data transmission and reception.

Furthermore, when data is transmitted and received by including one data frame in the PPDU, the efficiency of Wi-Fi communication competing channels for one transmission attempt (e.g., one transmission attempt of a PPDU) may be reduced. Therefore, the concept of frame aggregation may be introduced to Wi-Fi, allowing multiple data frames to be transmitted simultaneously.

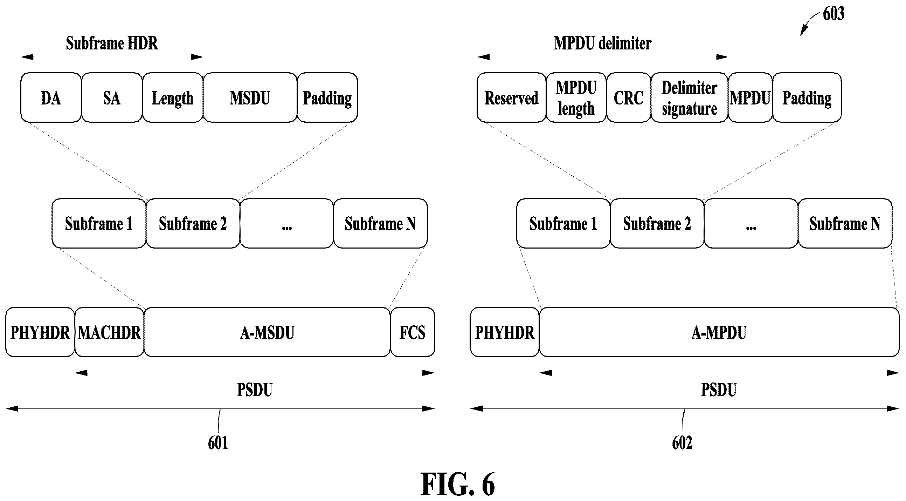

FIG. 6 is a diagram illustrating a PPDU to which frame aggregation is applied.

Referring to FIG. 6, an example of PPDUs 601 and 602 to which frame aggregation is applied may be identified. According to a frame aggregation method, a structure of a data frame included in PSDUs of the PPDUs 601 and 602 may be classified into aggregated (A)-MSDU and an A-MPDU.

The A-MSDU (e.g., an A-MSDU of the PPDU 601) may be obtained by compressing information about multiple data frames into one MAC header. The A-MPDU (e.g., an A-MPDU of the PPDU 602) may be obtained by adding a MAC header to each of the multiple data frames and compressing the multiple data frames. Since each MAC header includes an FCS for error detection, the A-MSDU may be vulnerable to errors because only one FCS exists in the A-MSDU. However, since the FCS exists for each MPDU (e.g., 603), the A-MPDU may easily determine which data frame (e.g., MPDU) has an error. Hereinafter, a method of determining whether an error occurs during transmission and reception of an A-MPDU is described.

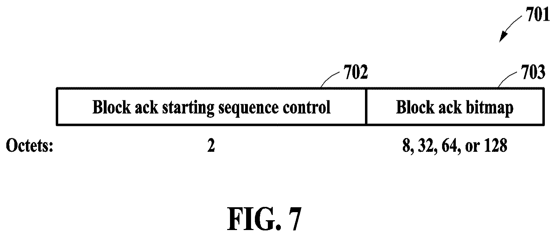

FIG. 7 is a diagram illustrating a compressed block acknowledgment (BA) frame.

Referring to FIG. 7, in response to receiving a set of data frames (e.g., A-MPDU), it may be possible to identify an information field 701 of a BA frame, which is a reception acknowledgment frame transmitted from a receiving side (e.g., the AP MLD 301 of FIG. 4) to a transmitting side (e.g., the non-AP MLD 401 of FIG. 4).

As described above with reference to FIG. 6, in an A-MPDU to which frame aggregation is applied, an error may occur only in a predetermined data frame, so an advanced reception acknowledgment frame is required. 802.11e introduces the concept of BA. A BA frame may indicate an error (e.g., transmission failure and/or missing transmission) of a predetermined data frame (e.g., MPDU) among all data frames (e.g., a set of data frames) (e.g., A-MPDU).

BA may be a method of expressing successfully received data and unreceived data in the entire data sequence as 1 and 0, respectively. The receiving side (e.g., the AP MLD 301 of FIG. 4) that receives data in an A-MPDU format may be configured to reply to the transmitting side (e.g., the non-AP MLD 401 of FIG. 4) with a BA frame.

BA may be classified into normal BA, compressed BA, and multi-traffic identifier (TID) BA. In general, the compressed BA may be the most commonly used.

The format illustrated in FIG. 7 may be the information field 701 of a compressed BA frame. The information field 701 may include a BA starting sequence control field 702 and a BA bitmap field 703.

The BA starting sequence control field 702 may include a start sequence number of a data frame to be responded to through a BA frame. A sequence number may be assigned to each MPDU (e.g., a data frame), and an A-MPDU, into which MPDUs are aggregated, may include information about a plurality of sequence numbers. A start sequence number may be a smallest sequence number among the MPDUs included in the A-MPDU. A BA frame for responding to the A-MPDU may include a start sequence number.

The BA bitmap field 703 may indicate whether a sequence number (e.g., a sequence number of an MPDU) within an expression range (e.g., the subfield length of a BA bitmap) starting from the above-mentioned start sequence number is successfully received. For example, when the start sequence number is 3 and the expression range of the BA bitmap field is 32, the BA frame may indicate through the BA bitmap field whether a data frame (e.g., PPDU) with a sequence number of 3 to a data frame with a sequence number of 34 are received.

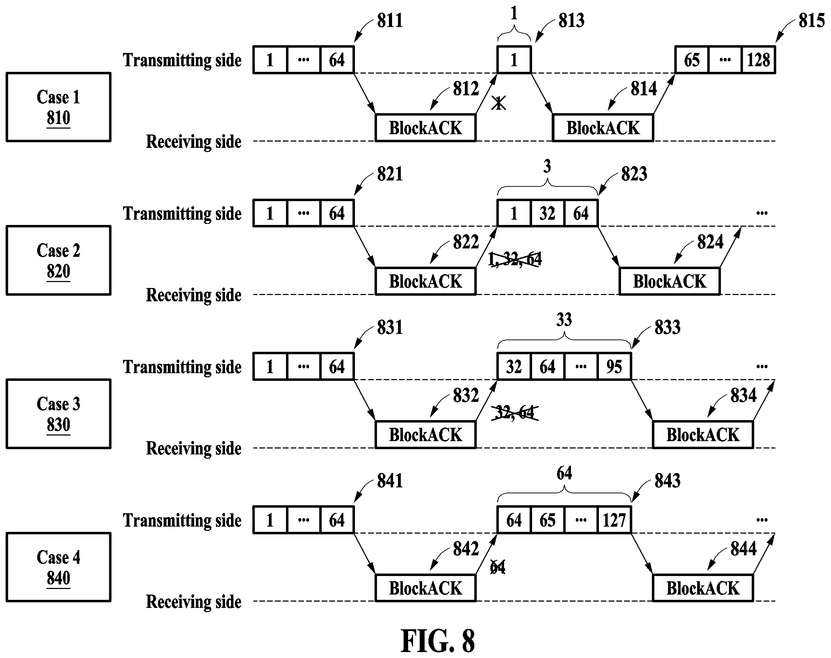

FIG. 8 is a diagram illustrating the transmission efficiency of an A-MPDU transmitted over a single link.

Referring to FIG. 8, when the A-MPDU is transmitted over a single link, the transmission efficiency of the A-MPDU may vary depending on the location of an MPDU that fails to be transmitted or is dropped from transmission.

Referring to a first case 810, a transmitting side (e.g., the non-AP MLD 401 of FIG. 4) may transmit an A-MPDU 811 (e.g., a set of one or more data frames (e.g., MPDUs)) to a receiving side (e.g., the AP MLD 301 of FIG. 4). The A-MPDU 811 may be a set of 64 data frames. The sequence numbers of MPDUs included in the A-MPDU 811 may be values greater than or equal to 1 and less than or equal to 64. The start sequence number of the A-MPDU 811 may be 1, and the expression range of the A-MPDU 811 may be 64.

In response to receiving the A-MPDU 811, the receiving side (e.g., the AP MLD 301 of FIG. 4) may reply to the transmitting side (e.g., the non-AP MLD 401 of FIG. 4) with a BA frame 812. The BA frame 812 may be a compressed BA frame. The BA frame 812 may indicate whether MPDUs having sequence numbers greater than or equal to 1 and less than or equal to 64 are successfully received. The start sequence number of the BA frame 812 may be 1, and whether the MPDUs are successfully received may be expressed in a BA bitmap, as described above with reference to FIG. 7. The BA frame 812 may include information indicating that an MPDU corresponding to sequence number 1 fails to be transmitted or is dropped from transmission.

In response to receiving the BA frame 812, the transmitting side (e.g., the non-AP MLD 401 of FIG. 4) may retransmit, to the receiving side (e.g., the AP MLD 301 of FIG. 4), an MPDU 813 (e.g., the MPDU corresponding to sequence number 1) that fails to be transmitted or is dropped from transmission. The receiving side (e.g., the AP MLD 301 of FIG. 4) that receives the MPDU 813 may reply to the transmitting side (e.g., the non-AP MLD 401 of FIG. 4) with a BA frame 814. The transmitting side (e.g., the non-AP MLD 401 of FIG. 4) that receives the BA frame 814 including information indicating that the MPDU 813 is successfully received may proceed with subsequent transmission (e.g., transmitting an A-MPDU 815 to the receiving side).

Referring to a second case 820, the transmitting side (e.g., the non-AP MLD 401 of FIG. 4) may transmit an A-MPDU 821 to the receiving side (e.g., the AP MLD 301 of FIG. 4). The A-MPDU 821 may be a set of 64 data frames. The sequence numbers of MPDUs included in the A-MPDU 821 may be values greater than or equal to 1 and less than or equal to 64. The start sequence number of the A-MPDU 821 may be 1, and the expression range of the A-MPDU 821 may be 64.

The receiving side (e.g., the AP MLD 301 of FIG. 4) may reply to the transmitting side (e.g., the non-AP MLD 401 of FIG. 4) with a BA frame 822 in response to receiving the A-MPDU 821. The BA frame 822 may be a compressed BA frame. The BA frame 822 may indicate whether MPDUs having sequence numbers greater than or equal to 1 and less than or equal to 64 are successfully received. The BA frame 822 may include information indicating that an MPDU corresponding to sequence number 1, an MPDU corresponding to sequence number 32, and an MPDU corresponding to sequence number 64 fail to be transmitted or are dropped from transmission.

In response to receiving the BA frame 822, the transmitting side (e.g., the non-AP MLD 401 of FIG. 4) may transmit, to the receiving side (e.g., the AP MLD 301 of FIG. 4), an A-MPDU 823 into which MPDUs that fail to be transmitted or are dropped from transmission are aggregated. The size of a data frame retransmitted in Case 1 810 may be different from the size of a data frame retransmitted in Case 2 820.

Referring to a third case 830, in response to receiving an A-MPDU 831, a BA frame 832 may include information indicating that an MPDU corresponding to sequence number 32 and an MPDU corresponding to sequence number 64 fail to be transmitted or are dropped from transmission.

In response to receiving the BA frame 832, the transmitting side (e.g., the non-AP MLD 401 of FIG. 4) may transmit, to the receiving side (e.g., the AP MLD 301 of FIG. 4), an A-MPDU 833 into which MPDUs that fail to be transmitted and are dropped from transmission are aggregated. Referring to the A-MPDU 833, MPDUs (e.g., an MPDU corresponding to sequence number 65 to an MPDU corresponding to sequence number 95) to be transmitted after the A-MPDU 831 as well as MPDUs that fail to be transmitted or are dropped from transmission may be aggregated into the A-MPDU 833. The A-MPDU 833 may be an aggregate of 33 MPDUs.

A fourth case 840 shows this difference more clearly. In response to receiving an A-MPDU 841, a BA frame 842 including information indicating that only an MPDU corresponding to sequence number 64 fails to be transmitted or is dropped from transmission may be transmitted to the transmitting side (e.g., the non-AP MLD 401 of FIG. 4), and the transmitting side (e.g., the non-AP MLD 401 of FIG. 4) may transmit, to the receiving side, an A-MPDU 843 (e.g., an A-MPDU into which 64 MPDUs are aggregated) into which the MPDU that fails to be transmitted or is dropped from transmission and MPDUs (e.g., the MPDU corresponding to sequence number 65 to an MPDU corresponding to sequence number 127) to be transmitted after the A-MPDU 841 are aggregated.

The difference in the aggregating level (e.g., degree) may be caused by the expression range of a bitmap of a BA frame (e.g., the subfield length of a BA bitmap). For example, even in the case of the BA frame 814 responding to the reception of one MPDU 813 (e.g., an MPDU corresponding to sequence number 1), the bitmap may be configured to indicate whether the MPDU corresponding to sequence number 1 to the MPDU corresponding to sequence number 64 are all received, according to a preset expression range (e.g., 64).

In this way, in communication utilizing a BA frame, a location in which errors occur has a greater impact on the efficiency of communication than the percentage of errors in received data. For example, in each of the first case 810 and the fourth case 840 in which the same A-MPDU (e.g., 811 and 841) is initially transmitted, one MPDU (e.g., the MPDU corresponding to sequence number 1 or the MPDU corresponding to sequence number 64) may fail to be transmitted or may be dropped from transmission (e.g., having the same error rate). However, the subsequent A-MPDU 843 of the fourth case 840 in which an MPDU corresponding to a higher sequence number (e.g., 64) is dropped may have a higher aggregating level than the subsequent A-MPDU 813 of the first case 810 in which an MPDU corresponding to a lower sequence number (e.g., 1) is dropped (e.g., 64 MPDUs are aggregated into the subsequent A-MPDU 843, and one MPDU is aggregated into the subsequent A-MPDU 813). Hereinafter, a diagram illustrating transmission efficiency of A-MPDUs transmitted over multiple links is described.

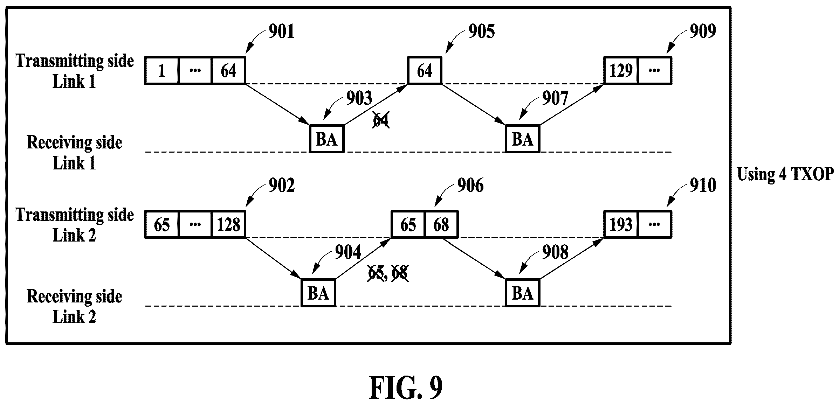

FIG. 9 is a diagram illustrating transmission efficiency of A-MPDUs transmitted over multiple links.

Referring to FIG. 9, when an A-MPDU is transmitted over multiple links, the benefits of multiple links may not be enjoyed due to transmission range overlap. A transmitting side (e.g., the non-AP MLD 401 of FIG. 4) may transmit an A-MPDU 901 (e.g., a set of one or more data frames (e.g., MPDUs)) to a receiving side (e.g., the AP MLD 301 of FIG. 4) over Link 1. The A-MPDU 901 may be a set of 64 data frames. The sequence numbers of MPDUs included in the A-MPDU 901 may be values greater than or equal to 1 and less than or equal to 64. The start sequence number of the A-MPDU 901 may be 1, and the expression range of the A-MPDU 901 may be 64. When a non-AP MLD (e.g., the non-AP MLD 401 of FIG. 4) communicates with an AP MLD (e.g., the AP MLD 301 of FIG. 4) according to an MLO, the sequence number may be distributed to each link.

The transmitting side (e.g., the non-AP MLD 401 of FIG. 4) may transmit an A-MPDU 902 to the receiving side (e.g., the AP MLD 301 of FIG. 4) over Link 2. The sequence numbers of the MPDUs included in the A-MPDU 901 may be values greater than or equal to 65 and less than or equal to 128. The start sequence number of the A-MPDU 901 may be 65, and the expression range of the A-MPDU 902 may be 64.

In response to receiving the A-MPDU 901, the receiving side (e.g., the AP MLD 301 of FIG. 4) may reply to the transmitting side (e.g., the non-AP MLD 401 of FIG. 4) with a BA frame 903 over Link 1. The BA frame 903 may be a compressed BA frame. The BA frame 903 may indicate whether MPDUs having sequence numbers greater than or equal to 1 and less than or equal to 64 are successfully received. The start sequence number of the BA frame 903 may be 1, and whether the MPDUs are successfully received may be expressed in a BA bitmap as described above with reference to FIG. 7. The BA frame 903 may include information indicating that an MPDU corresponding to sequence number 64 fails to be transmitted or is dropped from transmission.

In response to receiving the A-MPDU 902, the receiving side (e.g., the AP MLD 301 of FIG. 4) may reply to the transmitting side (e.g., the non-AP MLD 401 of FIG. 4) with a BA frame 904 over Link 2. The BA frame 904 may indicate whether MPDUs having sequence numbers greater than or equal to 65 and less than or equal to 128 are successfully received. The start sequence number of the BA frame 904 may be 65, and whether the MPDUs are successfully received may be expressed in the BA bitmap. The BA frame 904 may include information indicating that an MPDU corresponding to sequence number 65 and an MPDU corresponding to sequence number 68 fail to be transmitted or are dropped from transmission.

In response to receiving the BA frame 903, the transmitting side (e.g., the non-AP MLD 401 of FIG. 4) may retransmit, to the receiving side (e.g., the AP MLD 301 of FIG. 4), an MPDU 905 (e.g., an MPDU corresponding to sequence number 64) that fails to be transmitted or is dropped from transmission over Link 1. The receiving side (e.g., the AP MLD 301 of FIG. 4) that receives the MPDU 905 may reply to the transmitting side (e.g., the non-AP MLD 401 of FIG. 4) with a BA frame 907 over Link 1. The transmitting side (e.g., the non-AP MLD 401 of FIG. 4) that receives the BA frame 907 including information indicating that the MPDU 905 is successfully received may proceed with subsequent transmission (e.g., transmitting an A-MPDU (909) to the receiving side).

In response to receiving the BA frame 904, the transmitting side (e.g., the non-AP MLD 401 of FIG. 4) may retransmit, to the receiving side (e.g., the AP MLD 301 of FIG. 4), the A-MPDU 906 over Link 2 and similarly proceed with subsequent transmission (e.g., transmitting the A-MPDU 910 to the receiving side).

According to an MLO, multi-link devices (e.g., the AP MLD 301 and the non-AP MLD 401 of FIG. 4) that perform independent communication over respective links may not take advantage of multiple links. From the time the first BA frames 903 and 904 are received until the start of the subsequent transmission, four transmission opportunities (TXOPs) (e.g., 905, 906, 909, and 910) may be required.

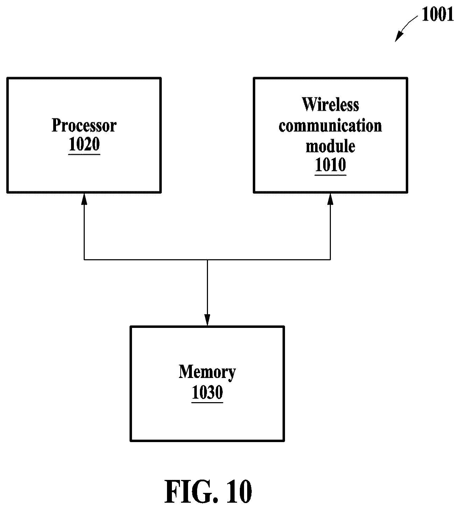

FIG. 10 is a schematic block diagram illustrating a non-AP MLD according to an embodiment.

According to an embodiment, an electronic device 1001 (e.g., the non-AP MLD 401 of FIG. 3) may perform an MLO. The electronic device 1001 may adaptively perform aggregation of MPDUs considering the MLO. The electronic device 1001 may efficiently operate a wireless resource by adaptively aggregating MPDUs (e.g., data frames) to be retransmitted over different links.

Referring to FIG. 10, according to an embodiment, the electronic device 1001 may include a wireless communication module 1010 (e.g., a wireless communication module 1892 of FIG. 18), a processor 1020 (e.g., a processor 1820 of FIG. 18), and memory 1030 (e.g., memory 1830 of FIG. 18). The wireless communication module 1010 may be configured to transmit and receive a wireless signal. The wireless communication module 1010 may be a Wi-Fi chipset. The wireless communication module 1010 may support multiple bands of 2.4 GHz, 5 GHz, and/or 6 GHz. The processor 1020 may be operatively connected to the wireless communication module 1010. The memory 1030 may store instructions.

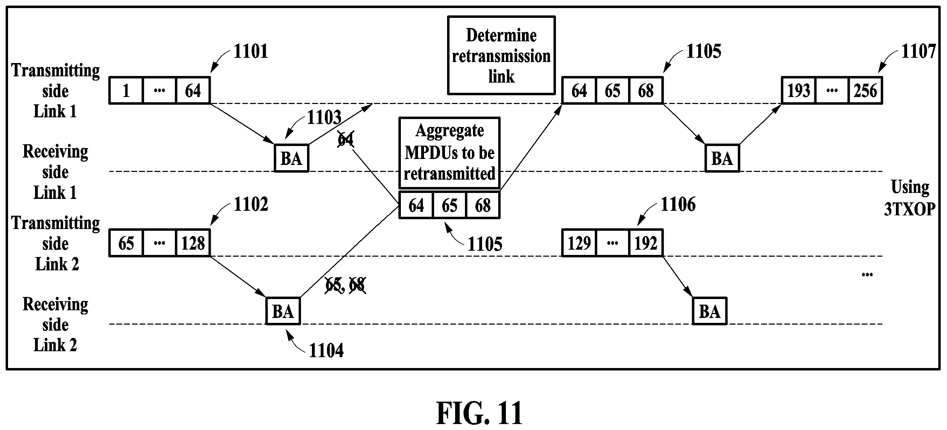

According to an embodiment, the memory 1030 may include one or more memories. The instructions stored in the memory 1030 may be stored in one memory. The instructions stored in the memory 1030 may be divided and stored in a plurality of memories. The instructions stored in the memory 1030 may be executed by the processor 1020 individually or collectively to cause the electronic device 1001 to perform and/or control the operations of the electronic device 1001 described with reference to FIGS. 1 to 10 and the operations of the electronic device 1001 described with reference to FIGS. 11 to 18.

According to an embodiment, the processor 1020 may be implemented as a system on chip (SoC) or circuitry (e.g., processing circuitry) such as an integrated circuit (IC). The processor 1020 may include at least one processor. For example, the processor 1020 may include a combination of one or more processors, such as a central processing unit (CPU), a graphics processing unit (GPU), a micro processing unit (MPU), an application processor (AP), and a communication processor (CP). The instructions stored in the memory 1030 may be executed by the processor to cause the wireless communication module 1010 to perform and/or control the operations of the electronic device 1001 described with reference to FIGS. 1 to 10 and the operations of the electronic device 1001 described with reference to FIGS. 11 to 18. The instructions stored in the memory 1030 may be executed by a plurality of processors to cause the electronic device 1001 to perform and/or control the operations of the electronic device 1001 described with reference to FIGS. 1 to 10 and the operations of the electronic device 1001 described with reference to FIGS. 11 to 18.

The electronic device 1001 may correspond to an electronic device (e.g., an electronic device 1801 of FIG. 18) described with reference to FIG. 18. Therefore, descriptions that overlap with parts that are described with reference to FIG. 18 are omitted. Operations performed by the electronic device 1001 may include operations performed by a wireless communication module (e.g., the wireless communication module 1010 of FIG. 10 or the wireless communication module 1892 of FIG. 18) and operations performed by a processor (e.g., the processor 1020 of FIG. 10 or the processor 1820 of FIG. 18) through the wireless communication module.

According to an embodiment, the electronic device 1001 may receive a first reception acknowledgment frame (e.g., a BA frame) over a first link for a first set (e.g., an A-MPDU) of data frames (e.g., MPDUs) transmitted over the first link. The electronic device 1001 may receive a second reception acknowledgment frame over a second link for a second set of data frames transmitted over the second link. Based on information included in a first reception acknowledgment frame and information included in a second reception acknowledgment frame, the electronic device 1001 may determine whether there is an overlap between a first data frame that fails to be transmitted or is dropped from transmission in the first set and a second data frame that fails to be transmitted or is dropped from transmission in the second set. Whether there is an overlap may be determined based on a first minimum sequence number that is a smallest number among the sequence numbers of the data frames included in the first data frame, a second minimum sequence number that is a smallest number among the sequence numbers of the data frames included in the second data frame, and the size (e.g., expression range) of a bitmap included in a reception acknowledgment frame (e.g., the first reception acknowledgment frame or the second reception acknowledgment frame). Whether there is an overlap may be defined as a case in which an overlap occurs when the difference value between the second minimum sequence number and the first minimum sequence number is less than the size of the bitmap. An example of determining whether there is an overlap is described with reference to FIG. 11. Based on whether there is an overlap, the electronic device 1001 may adaptively aggregate the first data frame and the second data frame into a third set of data frames.

According to an embodiment, the electronic device 1001 may receive BA frames respectively over a plurality of links for A-MPDUs transmitted respectively over the plurality of links according to the MLO. Based on information included in the BA frames, the electronic device 1001 may determine MPDUs that fail to be transmitted or are dropped from transmission from among MPDUs aggregated respectively into A-MPDUs. The electronic device 1001 may negotiate, with an external electronic device (e.g., an AP) (e.g., the AP MLD 301 of FIG. 3 or the electronic device 1804 of FIG. 18), the aggregating level of an A-MPDU into which the MPDUs that fail to be transmitted or are dropped from transmission are aggregated.

According to an embodiment, the electronic device 1001 may maximize the efficiency and usability of multiple links by adaptively operating frame aggregation in the MLO. The electronic device 1001 may efficiently utilize a wireless resource.

FIG. 11 is a diagram illustrating an operation of adaptively performing aggregation of an MPDU, according to an embodiment.

Referring to FIG. 11, according to an embodiment, the electronic device 1001 (e.g., a transmitting side) (e.g., the non-AP MLD 401 of FIG. 4) may transmit, to a receiving side (e.g., the AP MLD 301 of FIG. 4), a first set (e.g., an A-MPDU 1101) of data frames (e.g., MPDUs) transmitted over a first link (e.g., Link 1). The A-MPDU 1101 may be a set of 64 data frames. The sequence numbers of MPDUs included in the A-MPDU 1101 may be values greater than or equal to 1 and less than or equal to 64. The start sequence number of the A-MPDU 1101 may be 1, and the expression range of the A-MPDU 1101 (e.g., the subfield length of a BA bitmap) may be 64.

According to an embodiment, the electronic device 1001 (e.g., the transmitting side) (e.g., the non-AP MLD 401 of FIG. 4) may transmit, to the receiving side (e.g., the AP MLD 301 of FIG. 4), a first set (e.g., an A-MPDU 1102) of data frames (e.g., MPDUs) transmitted over a second link (e.g., Link 2). The A-MPDU 1102 may be a set of 64 data frames. The sequence numbers of MPDUs included in the A-MPDU 1102 may be values greater than or equal to 65 and less than or equal to 128. The start sequence number of the A-MPDU 1102 may be 65, and the expression range of the A-MPDU 1102 may be 64.

According to an embodiment, the electronic device 1001 (e.g., the transmitting side) (e.g., the non-AP MLD 401 of FIG. 4) may receive a reception acknowledgment frame 1103 (e.g., a BA frame) over the first link (e.g., Link 1). The BA frame 1103 may be a compressed BA frame. The BA frame 1103 may indicate whether MPDUs having sequence numbers greater than or equal to 1 and less than or equal to 64 are successfully received. The start sequence number of the BA frame 1103 may be 1, and whether the MPDUs are successfully received may be expressed in a BA bitmap as described above with reference to FIG. 7. The BA frame 1103 may include information indicating that an MPDU corresponding to sequence number 64 fails to be transmitted or is dropped from transmission.

According to an embodiment, the electronic device 1001 (e.g., the transmitting side) (e.g., the non-AP MLD 401 of FIG. 4) may receive a reception acknowledgment frame 1104 (e.g., a BA frame) over the second link (e.g., Link 2). The BA frame 1104 may indicate whether MPDUs having sequence numbers greater than or equal to 65 and less than or equal to 128 are successfully received. The start sequence number of the BA frame 1104 may be 65, and whether the MPDUs are successfully received may be expressed in the BA bitmap. The BA frame 1104 may include information indicating that an MPDU corresponding to sequence number 65 and an MPDU corresponding to sequence number 68 fail to be transmitted or are dropped from transmission.

According to an embodiment, based on information included in the first reception acknowledgment frame 1103 and information included in the second reception acknowledgment frame 1104, the electronic device 1001 (e.g., the transmitting side) (e.g., the non-AP MLD 401 of FIG. 4) may determine whether there is an overlap between a first data frame (e.g., the MPDU corresponding to sequence number 64) that fails to be transmitted or is dropped from transmission in the first set 1101 and a second data frame (e.g., the MPDU corresponding to sequence number 65 and the MPDU corresponding to sequence number 68) that fails to be transmitted or is dropped from transmission in the second set 1102.

According to an embodiment, whether there is an overlap may be determined based on a first minimum sequence number (e.g., 64) that is the smallest number among the sequence numbers of the data frames included in the first data frame (e.g., the MPDU corresponding to sequence number 64), a second minimum sequence number (e.g., 65) that is the smallest number among the sequence numbers of the data frames included in the second data frame (e.g., the MPDU corresponding to sequence number 65 and the MPDU corresponding to sequence number 68), and the size (e.g., expression range) (e.g., 64) of a bitmap included in a reception acknowledgment frame (e.g., the first reception acknowledgment frame 1103 or the second reception acknowledgment frame 1104). Whether there is an overlap may be defined as a case in which an overlap occurs when the difference value (e.g., 1) between the second minimum sequence number (e.g., 65) and the first minimum sequence number (e.g., 64) is less than the size (e.g., 64) of the bitmap. An operation of determining whether there is an overlap may be triggered in a situation in which the first data frame is in a pending state for transmission and a situation in which the second data frame is in a pending state for transmission (e.g., a situation in which there is residual backoff and a clear channel assessment (CCA) busy situation).

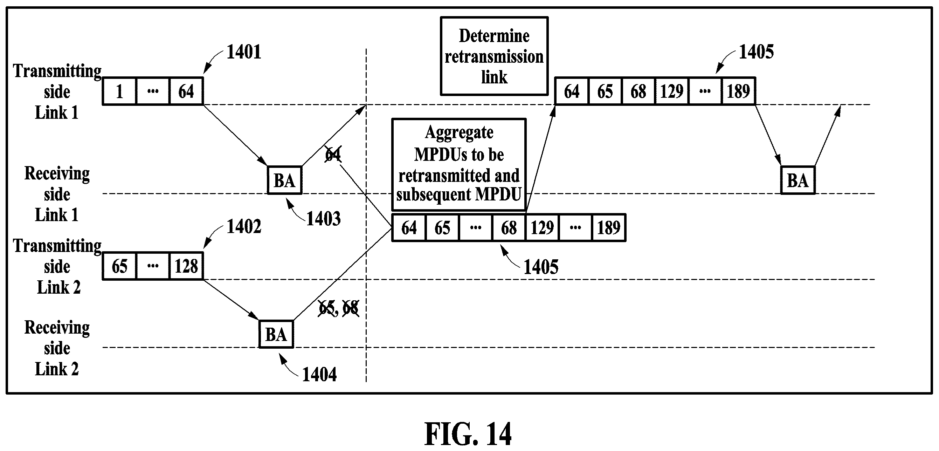

According to an embodiment, based on whether there is an overlap, the electronic device 1001 (e.g., the transmitting side) (e.g., the non-AP MLD 401 of FIG. 4) may aggregate the first data frame and the second data frame into a third set (e.g., an A-MPDU 1105) of data frames. In other words, the number of data frames (e.g., 3) aggregated into the third set (e.g., the A-MPDU 1105) may be different from the number of data frames (e.g., 64) aggregated into the first set (e.g., the A-MPDU 1101) and/or the number of data frames (e.g., 64) aggregated into the second set (e.g., the A-MPDU 1102). FIG. 11 illustrates that only the first data frame and the second data frame, which are data frames that fail to be transmitted or are dropped from transmission, are aggregated, but embodiments are not limited thereto. A case in which a subsequent transmission data frame is also aggregated along with a data frame that fails to be transmitted or is dropped from transmission is described below with reference to FIG. 14.

According to an embodiment, the electronic device 1001 (e.g., the transmitting side) (e.g., the non-AP MLD 401 of FIG. 4) may determine a link for transmitting the third set (e.g., the A-MPDU 1105). The electronic device 1001 (e.g., the transmitting side) (e.g., the non-AP MLD 401 of FIG. 4) may transmit the third set (e.g., the A-MPDU 1105) to the receiving side (e.g., the AP MLD 301 of FIG. 4) via a determined retransmission link (e.g., Link 1). The electronic device 1001 (e.g., the transmitting side) (e.g., the non-AP MLD 401 of FIG. 4) may proceed with the subsequent transmission (e.g., transmitting an A-MPDU 1106 to the receiving side over Link 2 and transmitting an A-MPDU 1107 to the receiving side over Link 1). FIG. 11 illustrates that a link through which the third set (e.g., the A-MPDU 1105) is transmitted is the same as a link through which the first set (e.g., the A-MPDU 1101) is transmitted, but embodiments are not limited thereto. The third set (e.g., the A-MPDU 1105) may be transmitted through any one of Link 1 (e.g., 2.4 GHz), Link 2 (e.g., 5 GHz), or Link 3 (e.g., 6 GHz).

According to an embodiment, the electronic device 1001 (e.g., the transmitting side) (e.g., the non-AP MLD 401 of FIG. 4) may take advantage of multiple links. From the time the first BA frames 1103 and 1104 are received until the start of the subsequent transmission, three TXOPs (e.g., 1105, 1106, and 1107) may be required. The electronic device 1001 may maximize the efficiency and usability of multiple links by adaptively operating frame aggregation in an MLO. The electronic device 1001 may efficiently utilize a wireless resource. Hereinafter, a method of adjusting an aggregating level when the number of data frames (e.g., MPDUs) to be retransmitted is greater than the expression range (e.g., 64) of a BA frame is described.

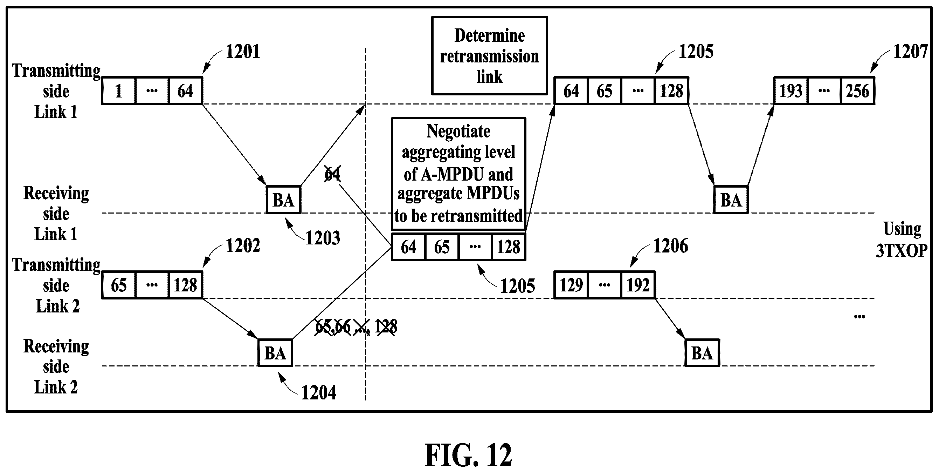

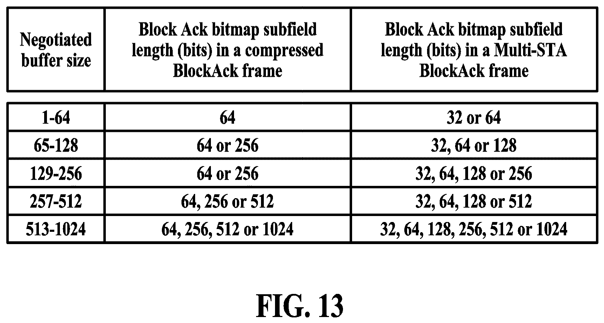

FIGS. 12 and 13 are diagrams illustrating an operation of adaptively performing aggregation of MPDUs, according to an embodiment.

Referring to FIG. 12, according to an embodiment, for A-MPDUs (e.g., 1201 and 1202) transmitted respectively over a plurality of links (e.g., Link 1 and Link 2), the electronic device 1001 (e.g., the transmitting side) (e.g., the non-AP MLD 401 of FIG. 4) may receive BA frames (e.g., 1203 and 1204) respectively over the plurality of links according to an MLO.

According to an embodiment, based on information included in the BA frames 1203 and 1204, the electronic device 1001 (e.g., the transmitting side) (e.g., the non-AP MLD 401 of FIG. 4) may determine MPDUs that fail to be transmitted or are dropped from transmission from among MPDUs aggregated respectively into the A-MPDUs 1201 and 1202.

According to an embodiment, based on information included in the BA frame 1203, the electronic device 1001 (e.g., the transmitting side) (e.g., the non-AP MLD 401 of FIG. 4) may determine that an MPDU corresponding to sequence number 64 fails to be transmitted or is dropped from transmission. Based on information included in the BA frame 1204, the electronic device 1001 (e.g., the transmitting side) (e.g., the non-AP MLD 401 of FIG. 4) may determine that an MPDU corresponding to sequence number 65 to an MPDU corresponding to sequence number 128 fail to be transmitted or are dropped from transmission (e.g., all MPDUs fail to be transmitted or are dropped from transmission). Accordingly, the number of MPDUs to be retransmitted (e.g., the number of MPDUs that fail to be transmitted or are dropped from transmission over Link 1 + the number of MPDUs that fail to be transmitted or are dropped from transmission over Link 2 = 65) may be greater than the expression range (e.g., the subfield length of a BA bitmap) (e.g., 64) of a BA frame. Even when all MPDUs to be retransmitted are aggregated and transmitted to the receiving side (e.g., the AP-MLD 301 of FIG. 4), the BA frame may not fully express whether the MPDUs are successfully received.

According to an embodiment, the electronic device 1001 (e.g., the transmitting side) (e.g., the non-AP MLD 401 of FIG. 4) may negotiate, with an external electronic device (e.g., an AP) (e.g., the AP MLD 301 of FIG. 3 or the electronic device 1804 of FIG. 18), an aggregating level of an A-MPDU into which MPDUs that fail to be transmitted and are dropped from transmission are aggregated. The electronic device 1001 (e.g., the transmitting side) (e.g., the non-AP MLD 401 of FIG. 4) may negotiate the aggregating level by negotiating a buffer size of the receiving side (e.g., the AP-MLD 301 of FIG. 4) (e.g., through transmission and reception of an add BA (ADDBA) frame with the receiving side (e.g., the AP-MLD 301 of FIG. 4)).

Referring to FIG. 13, according to an embodiment, the buffer size and the subfield length of the BA bitmap may be identified. The electronic device 1001 (e.g., the transmitting side) (e.g., the non-AP MLD 401 of FIG. 4) may negotiate the buffer size according to transmission and reception of ADDBA with the receiving side (e.g., the AP-MLD 301 of FIG. 4) and based on the negotiated buffer size, determine the subfield length of the BA bitmap (e.g., a BA bitmap included in a BA frame).

According to an embodiment, the electronic device 1001 (e.g., the transmitting side) (e.g., the non-AP MLD 401 of FIG. 4) and the receiving side (e.g., the AP-MLD 301 of FIG. 4) may negotiate the buffer size as one of 1 to 1024, and the subfield length of the BA bitmap may be determined according to the range of the negotiated buffer size. For example, when the size of the negotiated buffer is one of 513 to 1024, the subfield length of the BA bitmap may be 64, 256, 512, or 1024 (bits) in a compressed BA frame and 32, 64, 128, 256, 512, or 1024 (bits) in a multi-station BA frame.

According to an embodiment, referring to FIG. 12, the electronic device 1001 (e.g., the transmitting side) (e.g., the non-AP MLD 401 of FIG. 4) may negotiate the aggregating level (e.g., negotiate the expression range of a BA frame to 128) (e.g., negotiate the size of a bitmap of the BA frame to 128) by negotiating the buffer size of the receiving side (e.g., the AP-MLD 301 of FIG. 4) (e.g., through transmission and reception of an ADDBA frame with the receiving side (e.g., the AP-MLD 301 of FIG. 4)). Aggregating level negotiation may be triggered when the difference value (e.g., 64) between the sequence number (e.g., 128) of the last MPDU in which an error occurs in a link (e.g., Link 2) through which an MPDU with a higher sequence number is transmitted and the sequence number (e.g., 64) of the first MPDU in which an error occurs in a link (e.g., Link 1) through which an MPDU with a lower sequence number is transmitted is greater than or equal to the size (e.g., 64) of the BA bitmap.

According to an embodiment, based on the negotiated aggregating level, the electronic device 1001 (e.g., the transmitting side) (e.g., the non-AP MLD 401 of FIG. 4) may aggregate MPDUs that fail to be transmitted or are dropped from transmission into one A-MPDU 1205. According to an embodiment, aggregating level negotiation may be triggered in a situation in which MPDUs that fail to be transmitted or are dropped from transmission are in a pending state for transmission. Aggregating level negotiation may be triggered when the difference value between minimum sequence numbers of A-MPDUs is less than the sizes of the bitmaps of BA frames (e.g., when there is an overlap as described with reference to FIG. 11).

According to an embodiment, the electronic device 1001 (e.g., the transmitting side) (e.g., the non-AP MLD 401 of FIG. 4) may determine a link for transmitting the third set (e.g., the A-MPDU 1205). The electronic device 1001 (e.g., the transmitting side) (e.g., the non-AP MLD 401 of FIG. 4) may transmit the third set (e.g., the A-MPDU 1205) to the receiving side (e.g., the AP MLD 301 of FIG. 4) via a determined retransmission link (e.g., Link 1). The electronic device 1001 (e.g., the transmitting side) (e.g., the non-AP MLD 401 of FIG. 4) may proceed with the subsequent transmission (e.g., transmitting an A-MPDU 1206 to the receiving side over Link 2 and transmitting an A-MPDU 1207 to the receiving side over Link 1).

According to an embodiment, the electronic device 1001 (e.g., the transmitting side) (e.g., the non-AP MLD 401 of FIG. 4) may take advantage of multiple links. The electronic device 1001 may adaptively operate frame aggregation in an MLO through negotiation with the receiving side. The electronic device 1001 (e.g., the transmitting side) (e.g., the non-AP MLD 401 of FIG. 4) may maximize the efficiency and usability of multiple links and efficiently utilize a wireless resource.

FIG. 14 is a diagram illustrating an operation of adaptively performing aggregation of MPDUs, according to an embodiment.

Referring to FIG. 14, according to an embodiment, when aggregating data frames to be retransmitted (e.g., an MPDU corresponding to sequence number 64, an MPDU corresponding to sequence number 65, and an MPDU corresponding to sequence number 68), the electronic device 1001 (e.g., the transmitting side) (e.g., the non-AP MLD 401 of FIG. 4) may aggregate subsequent data frames (e.g., an MPDU corresponding to sequence number 129 to an MPDU corresponding to sequence number 189) together.

According to an embodiment, the electronic device 1001 (e.g., the transmitting side) (e.g., the non-AP MLD 401 of FIG. 4) may take advantage of multiple links. The electronic device 1001 may efficiently utilize a wireless resource by aggregating data frames to be retransmitted and subsequent data frames.

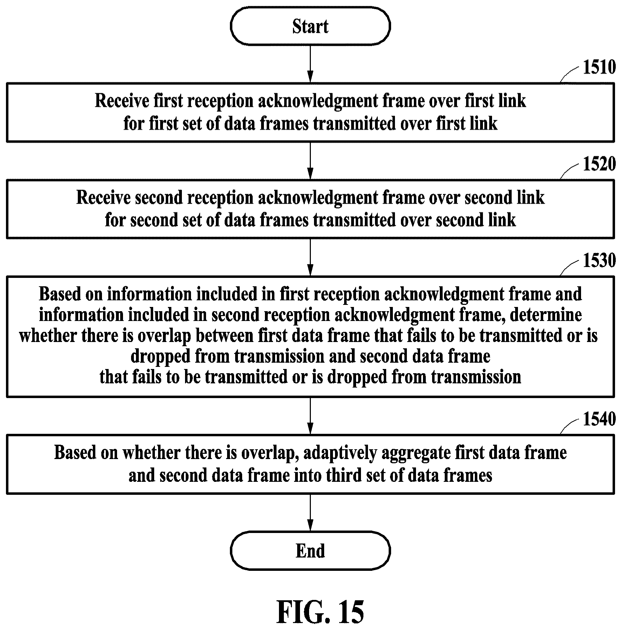

FIGS. 15 to 17 are flowcharts of an operating method of an electronic device, according to an embodiment.

Referring to FIG. 15, according to an embodiment, operations 1510 to 1540 may be performed sequentially but not necessarily. For example, operations 1510 to 1540 may be performed in different orders, and at least two operations may be performed in parallel.

According to an embodiment, in operation 1510, an electronic device (e.g., the electronic device 1001 of FIG. 10 or the electronic device 1801 of FIG. 18) may receive a first reception acknowledgment frame over a first link for a first set of data frames transmitted over the first link.

According to an embodiment, in operation 1520, the electronic device 1001 may receive a second reception acknowledgment frame over a second link for a second set of data frames transmitted over the second link.

According to an embodiment, in operation 1530, based on information included in a first reception acknowledgment frame and information included in a second reception acknowledgment frame, the electronic device 1001 may determine whether there is an overlap between a first data frame that fails to be transmitted or is dropped from transmission in the first set and a second data frame that fails to be transmitted or is dropped from transmission in the second set.

According to an embodiment, in operation 1540, based on whether there is an overlap, the electronic device 1001 may adaptively aggregate the first data frame and the second data frame into a third set of data frames.

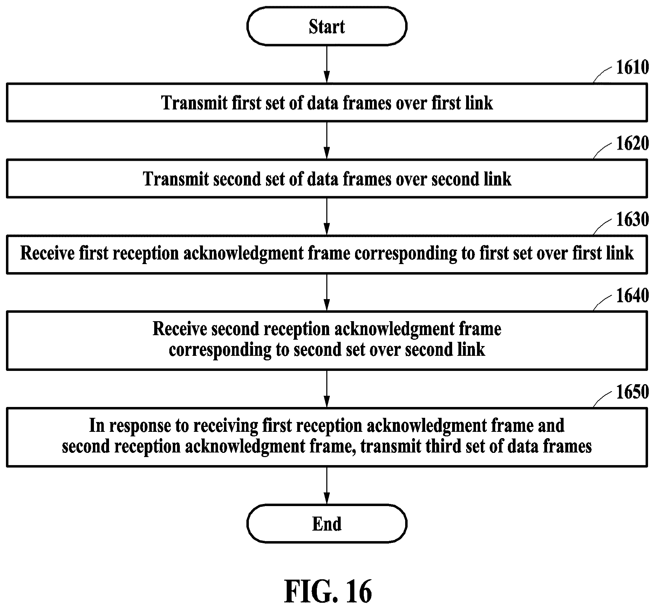

Referring to FIG. 16, according to an embodiment, operations 1610 to 1650 may be performed sequentially but not necessarily. For example, operations 1610 to 1650 may be performed in different orders, and at least two operations may be performed in parallel.

According to an embodiment, in operation 1610, an electronic device (e.g., the electronic device 1001 of FIG. 10 or the electronic device 1801 of FIG. 18) may transmit a first set of data frames over a first link. Operations performed by the electronic device 1001 may include operations performed by a wireless communication module (e.g., the wireless communication module 1010 of FIG. 10 or the wireless communication module 1892 of FIG. 18) and operations performed by a processor (e.g., the processor 1020 of FIG. 10 or the processor 1820 of FIG. 18) through the wireless communication module.

According to an embodiment, in operation 1620, the electronic device 1001 may transmit a second set of data frames over a second link.

According to an embodiment, in operation 1630, the electronic device 1001 may receive a first reception acknowledgment frame corresponding to a first set over a first link.

According to an embodiment, in operation 1640, the electronic device 1001 may receive a second reception acknowledgment frame corresponding to a second set over a second link.

According to an embodiment, in operation 1650, the electronic device 1001 may transmit a third set of data frames in response to receiving the first reception acknowledgment frame and the second reception acknowledgment frame. Each of the sequence numbers of the data frames included in the third set may correspond to one of the sequence numbers of the data frames included in the first set and the sequence numbers of the data frames included in the second set.

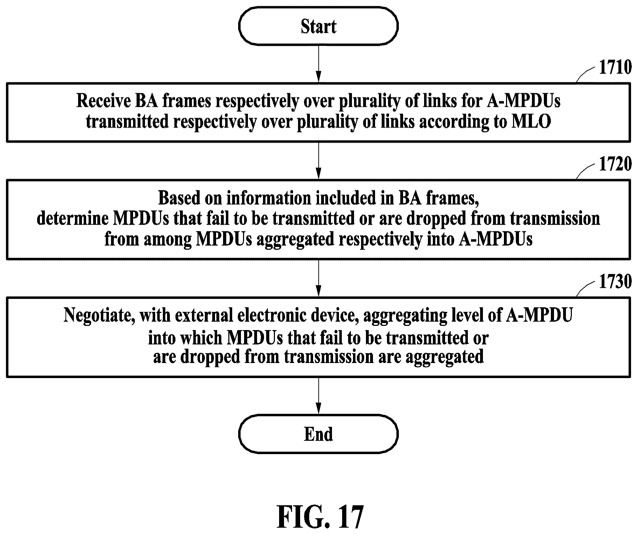

Referring to FIG. 17, according to an embodiment, operations 1710 to 1730 may be performed sequentially but not necessarily. For example, operations 1710 to 1730 may be performed in different orders, and at least two operations may be performed in parallel.

According to an embodiment, in operation 1710, an electronic device (e.g., the electronic device 1001 of FIG. 10 or the electronic device 1801 of FIG. 18) may receive BA frames respectively over a plurality of links for A-MPDUs transmitted respectively over the plurality of links, according to an MLO.

According to an embodiment, in operation 1720, based on information included in BA frames, the electronic device 1001 may determine MPDUs that fail to be transmitted or are dropped from transmission among MPDUs aggregated respectively into A-MPDUS.

According to an embodiment, in operation 1730, the electronic device 1001 may negotiate, with an external electronic device (e.g., an AP) (e.g., the AP MLD 301 of FIG. 3 or the electronic device 1804 of FIG. 18), an aggregating level of an A-MPDU into which the MPDUs that fail to be transmitted or are dropped from transmission are aggregated.

FIG. 18 is a block diagram illustrating an electronic device in a network environment according to an embodiment.

Referring to FIG. 18, an electronic device 1801 in a network environment 1800 may communicate with the electronic device 1802 via a first network 1898 (e.g., a short-range wireless communication network), or at least one of an electronic device 1804 or a server 1808 via a second network 1899 (e.g., a long-range wireless communication network). According to an embodiment, the electronic device 1801 may communicate with the electronic device 1804 via the server 1808. According to an embodiment, the electronic device 1801 may include the processor 1820, the memory 1830, an input module 1850, a sound output module 1855, a display module 1860, an audio module 1870, a sensor module 1876, an interface 1877, a connecting terminal 1878, a haptic module 1879, a camera module 1880, a power management module 1888, a battery 1889, a communication module 1890, a subscriber identification module (SIM) 1896, or an antenna module 1897. In some embodiments, at least one of the components (e.g., the connecting terminal 1878) may be omitted from the electronic device 1801, or one or more other components may be added to the electronic device 1801. In some embodiments, some of the components (e.g., the sensor module 1876, the camera module 1880, or the antenna module 1897) may be implemented as a single component (e.g., the display module 1860).

The processor 1820 may execute, for example, software (e.g., a program 1840) to control at least one other component (e.g., a hardware or software component) of the electronic device 1801 coupled with the processor 1820, and may perform various data processing or computation. According to an embodiment, as at least part of the data processing or computation, the processor 1820 may store a command or data received from another component (e.g., the sensor module 1876 or the communication module 1890) in volatile memory 1832, process the command or the data stored in the volatile memory 1832, and store resulting data in non-volatile memory 1834. According to an embodiment, the processor 1820 may include a main processor 1821 (e.g., a CPU or an AP), or an auxiliary processor 1823 (e.g., a GPU, a neural processing unit (NPU), an image signal processor (ISP), a sensor hub processor, or a CP) that is operable independently from, or in conjunction with the main processor 1821. For example, when the electronic device 1801 includes the main processor 1821 and the auxiliary processor 1823, the auxiliary processor 1823 may be adapted to consume less power than the main processor 1821, or to be specific to a specified function. The auxiliary processor 1823 may be implemented as separate from, or as part of the main processor 1821.

The auxiliary processor 1823 may control at least some of functions or states related to at least one component (e.g., the display module 1860, the sensor module 1876, or the communication module 1890) among the components of the electronic device 1801, instead of the main processor 1821 while the main processor 1821 is in an inactive (e.g., sleep) state, or together with the main processor 1821 while the main processor 1821 is in an active state (e.g., executing an application). According to an embodiment, the auxiliary processor 1823 (e.g., an ISP or a CP) may be implemented as part of another component (e.g., the camera module 1880 or the communication module 1890) functionally related to the auxiliary processor 1823. According to an embodiment, the auxiliary processor 1823 (e.g., the NPU) may include a hardware structure specified for artificial intelligence (AI) model processing. An AI model may be generated by machine learning. Such learning may be performed e.g., by the electronic device 1801 where the AI model is performed or via a separate server (e.g., the server 1808). Learning algorithms may include, but are not limited to, e.g., supervised learning, unsupervised learning, semi-supervised learning, or reinforcement learning. The AI model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network, or a combination of two or more thereof but is not limited thereto. The AI model may, additionally or alternatively, include a software structure other than the hardware structure.

The memory 1830 may store various data used by at least one component (e.g., the processor 1820 or the sensor module 1876) of the electronic device 1801. The various data may include, for example, software (e.g., the program 1840) and input data or output data for a command related thereto. The memory 1830 may include the volatile memory 1832 or the non-volatile memory 1834.

The program 1840 may be stored in the memory 1830 as software, and may include, for example, an operating system (OS) 1842, middleware 1844, or an application 1846.

The input module 1850 may receive a command or data to be used by another component (e.g., the processor 1820) of the electronic device 1801, from the outside (e.g., a user) of the electronic device 1801. The input module 1850 may include, for example, a microphone, a mouse, a keyboard, a key (e.g., a button), or a digital pen (e.g., a stylus pen).

The sound output module 1855 may output sound signals to the outside of the electronic device 1801. The sound output module 1855 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1860 may visually provide information to the outside (e.g., a user) of the electronic device 1801. The display module 1860 may include, for example, a display, a hologram device, or a projector and control circuitry to control a corresponding one of the display, hologram device, and projector. According to an embodiment, the display module 1860 may include a touch sensor adapted to detect a touch, or a pressure sensor adapted to measure the intensity of force incurred by the touch.

The audio module 1870 may convert a sound into an electrical signal and vice versa. According to an embodiment, the audio module 1870 may obtain the sound via the input module 1850, or output the sound via the sound output module 1855 or an external electronic device (e.g., the electronic device 1802) (e.g., a speaker or headphones) directly or wirelessly coupled with the electronic device 1801.

The sensor module 1876 may detect an operational state (e.g., power or temperature) of the electronic device 1801 or an environmental state (e.g., a state of a user) external to the electronic device 1801, and then generate an electrical signal or data value corresponding to the detected state. According to an embodiment, the sensor module 1876 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1877 may support one or more specified protocols to be used for the electronic device 1801 to be coupled with the external electronic device (e.g., the electronic device 1802) directly or wirelessly. According to an embodiment, the interface 1877 may include, for example, a high definition multimedia interface (HDMI), a universal serial bus (USB) interface, a secure digital (SD) card interface, or an audio interface.

The connecting terminal 1878 may include a connector via which the electronic device 1801 may be physically connected with the external electronic device (e.g., the electronic device 1802). According to an embodiment, the connecting terminal 1878 may include, for example, an HDMI connector, a USB connector, an SD card connector, or an audio connector (e.g., a headphone connector).

The haptic module 1879 may convert an electrical signal into a mechanical stimulus (e.g., a vibration or a movement) or electrical stimulus which may be recognized by a user via his or her tactile sensation or kinesthetic sensation. According to an embodiment, the haptic module 1879 may include, for example, a motor, a piezoelectric element, or an electric stimulator.

The camera module 1880 may capture a still image and moving images. According to an embodiment, the camera module 1880 may include one or more lenses, image sensors, ISPs, or flashes.

The power management module 1888 may manage power supplied to the electronic device 1801. According to an embodiment, the power management module 1888 may be implemented as at least part of, for example, a power management integrated circuit (PMIC).

The battery 1889 may supply power to at least one component of the electronic device 1801. According to an embodiment, the battery 1889 may include, for example, a primary cell which is not rechargeable, a secondary cell which is rechargeable, or a fuel cell.

The communication module 1890 may support establishing a direct (e.g., wired) communication channel or a wireless communication channel between the electronic device 1801 and the external electronic device (e.g., the electronic device 1802, the electronic device 1804, or the server 1808) and performing communication via the established communication channel. The communication module 1890 may include one or more CPs that are operable independently from the processor 1820 (e.g., the AP) and support direct (e.g., wired) communication or wireless communication. According to an embodiment, the communication module 1890 may include a wireless communication module 1892 (e.g., a cellular communication module, a short-range wireless communication module, or a global navigation satellite system (GNSS) communication module) or a wired communication module 1894 (e.g., a LAN communication module, or a power line communication (PLC) module). A corresponding one of these communication modules may communicate with the external electronic device 1804 via the first network 1898 (e.g., a short-range communication network, such as Bluetooth^{™}, Wi-Fi Direct, or infrared data association (IrDA)) or the second network 1899 (e.g., a long-range communication network, such as a legacy cellular network, a fifth-generation (5G) network, a next-generation communication network, the Internet, or a computer network (e.g., LAN or wide area network (WAN)). These various types of communication modules may be implemented as a single component (e.g., a single chip) or may be implemented as multiple components (e.g., multiple chips) separate from each other. The wireless communication module 1892 may identify and authenticate the electronic device 1801 in a communication network, such as the first network 1898 or the second network 1899, using subscriber information (e.g., international mobile subscriber identity (IMSI)) stored in the SIM 1896.

The wireless communication module 1892 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1892 may support a high-frequency band (e.g., a millimeter wave (mmWave) band) to achieve, e.g., a high data transmission rate. The wireless communication module 1892 may support various technologies for securing performance on a high-frequency band, such as, e.g., beamforming, massive multiple-input and multiple-output (massive MIMO), full dimensional MIMO (FD-MIMO), an array antenna, analog beam-forming, or a large scale antenna. The wireless communication module 1892 may support various requirements specified in the electronic device 1801, an external electronic device (e.g., the electronic device 1804), or a network system (e.g., the second network 1899). According to an embodiment, the wireless communication module 1892 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 1897 may transmit or receive a signal or power to or from the outside (e.g., the external electronic device) of the electronic device 1801. According to an embodiment, the antenna module 1897 may include an antenna including a radiating element composed of a conductive material or a conductive pattern formed in or on a substrate (e.g., a printed circuit board (PCB)). According to an embodiment, the antenna module 1897 may include a plurality of antennas (e.g., array antennas). In such a case, at least one antenna appropriate for a communication scheme used in the communication network, such as the first network 1898 or the second network 1899, may be selected, for example, by the communication module 1890 from the plurality of antennas. The signal or the power may then be transmitted or received between the communication module 1890 and the external electronic device via the selected at least one antenna. According to an embodiment, another component (e.g., a radio frequency integrated circuit (RFIC)) other than the radiating element may be additionally formed as part of the antenna module 1897.

According to an embodiment, the antenna module 1897 may form a mmWave antenna module. According to an embodiment, the mmWave antenna module may include a PCB, an RFIC disposed on a first surface (e.g., the bottom surface) of the PCB, or adjacent to the first surface and capable of supporting a designated high-frequency band (e.g., the mmWave band), and a plurality of antennas (e.g., array antennas) disposed on a second surface (e.g., the top or a side surface) of the PCB, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1801 and the external electronic device 1804 via the server 1808 coupled with the second network 1899. Each of the external electronic devices 1802 or 1804 may be a device of a same type as, or a different type, from the electronic device 1801. According to an embodiment, all or some of operations to be executed at the electronic device 1801 may be executed at one or more of the external electronic devices 1802, 1804, or 1808. For example, if the electronic device 1801 should perform a function or a service automatically, or in response to a request from a user or another device, the electronic device 1801, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1801. The electronic device 1801 may provide the outcome, with or without further processing of the outcome, as at least part of a reply to the request. To that end, cloud computing, distributed computing, mobile edge computing (MEC), or client-server computing technology may be used, for example. The electronic device 1801 may provide ultra low-latency services using, e.g., distributed computing or MEC. In another embodiment, the external electronic device 1804 may include an Internet-of-Things (IoT) device. The server 1808 may be an intelligent server using machine learning and/or a neural network. According to an embodiment, the external electronic device 1804 or the server 1808 may be included in the second network 1899. The electronic device 1801 may be applied to intelligent services (e.g., smart home, smart city, smart car, or healthcare) based on 5G communication technology or IoT-related technology.

The electronic device according to an embodiment may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that an embodiment of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms such as "1st" and "2nd," or "first" and "second" may be used to simply distinguish a corresponding component from another, and do not limit the components in other aspect (e.g., importance or order). It is to be understood that if an element (e.g., a first element) is referred to, with or without the term "operatively" or "communicatively," as "coupled with," "coupled to," "connected with," or "connected to" another element (e.g., a second element), it means that the element may be coupled with the other element directly (e.g., wiredly), wirelessly, or via a third element.

As used in connection with an embodiment of the disclosure, the term "module" may include a unit implemented in hardware, software, or firmware, and may interchangeably be used with other terms, for example, "logic," "logic block," "part," or "circuitry." A module may be a single integral component, or a minimum unit or part thereof, adapted to perform one or more functions. For example, according to an embodiment, the module may be implemented in a form of an application-specific integrated circuit (ASIC).

An embodiment as set forth herein may be implemented as software (e.g., the program 1840) including one or more instructions that are stored in a storage medium (e.g., internal memory 1836 or external memory 1838) that is readable by a machine (e.g., the electronic device 1801). For example, a processor (e.g., the processor 1820) of the machine (e.g., the electronic device 1801) may invoke at least one of the one or more instructions stored in the storage medium, and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to an embodiment of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities, and some of the multiple entities may be separately disposed in different components. According to an embodiment, one or more of the above-described components may be omitted, or one or more other components may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to an embodiment, operations performed by the module, the program, or another component may be carried out sequentially, in parallel, repeatedly, or heuristically, or one or more of the operations may be executed in a different order or omitted, or one or more other operations may be added.

According to an embodiment, an electronic device (e.g., the non-AP MLD 401 of FIG. 4, the electronic device 1001 of FIG. 10, or the electronic device 1801 of FIG. 18) may include at least one wireless communication module (e.g., the wireless communication module 1010 of FIG. 10 and the wireless communication module 1892 of FIG. 18) configured to transmit and receive a wireless signal. The electronic device 401, 1001, 1801 may include at least one processor (e.g., the processor 1020 of FIG. 10 and the processor 1820 of FIG. 18) operatively connected to the wireless communication module 1010, 1892. The electronic device 401, 1001, or 1801 may include memory (e.g., the memory 1030 of FIG. 10 or the memory 1830 of FIG. 18) storing instructions. The instructions, when executed by the processor 1020, 1820 individually or collectively, may cause the electronic device 401, 1001, 1801 to receive a first reception acknowledgment frame over a first link for a first set of data frames transmitted over the first link. The instructions, when executed by the processor 1020, 1820 individually or collectively, may cause the electronic device 401, 1001, 1801 to receive a second reception acknowledgment frame over a second link for a second set of data frames transmitted over the second link. The instructions, when executed by the processor 1020, 1820 individually or collectively, may cause the electronic device 401, 1001, 1801 to, based on information included in the first reception acknowledgment frame and information included in the second reception acknowledgment frame, determine whether there is an overlap between a first data frame that fails to be transmitted or is dropped from transmission in the first set and a second data frame that fails to be transmitted or is dropped from transmission in the second set. The instructions, when executed by the processor 1020, 1820 individually or collectively, may cause the electronic device 401, 1001, 1801 to, based on whether there is the overlap, adaptively aggregate the first data frame and the second data frame into a third set of data frames.

According to an embodiment, each of data frames included in the first set, the second set, and the third set may correspond to an MPDU to which a sequence number is assigned. Each of the first set, the second set, and the third set may correspond to an A-MPDU into which one or more MPDUs are aggregated. Each of the first reception acknowledgment frame and the second reception acknowledgment frame may correspond to a BA frame.

According to an embodiment, each of the first reception acknowledgment frame and the second reception acknowledgment frame may include a start sequence number of a corresponding set and a bitmap indicating a reception state of each of data frames aggregated into the corresponding set.

According to an embodiment, the instructions, when executed by the processor 1020, 1820 individually or collectively, may cause the electronic device 401, 1001, 1801 to, based on a first minimum sequence number that is a smallest number among sequence numbers of data frames included in the first data frame, a second minimum sequence number that is a smallest number among sequence numbers of data frames included in the second data frame, and a size of a bitmap included in the first reception acknowledgment frame or the second reception acknowledgment frame, determine whether there is the overlap
According to an embodiment, whether there is the overlap may be defined as a case in which an overlap occurs when a difference value between the second minimum sequence number and the first minimum sequence number is less than the size of the bitmap.

According to an embodiment, the instructions, when executed by the processor 1020, 1820 individually or collectively, may cause the electronic device 401, 1001, 1801 to trigger a determination of whether there is the overlap in a situation in which the first data frame is in a pending state for transmission and the second data frame is in a pending state for transmission.

According to an embodiment, the instructions, when executed by the processor 1020, 1820 individually or collectively, may cause the electronic device 401, 1001, 1801 to determine a link for transmitting the third set.

According to an embodiment, a link through which the third set is transmitted may be different from the first link or the second link.

According to an embodiment, the instructions, when executed by the processor 1020, 1820 individually or collectively, may cause the electronic device 401, 1001, 1801 to adjust an aggregating level of the third set by negotiating a buffer size of an external electronic device (e.g., the AP MLD 301 of FIG. 3 or the electronic device 1804 of FIG. 18) through transmission and reception of an ADDBA frame to and from the external electronic device.

According to an embodiment, the instructions, when executed by the processor 1020, 1820 individually or collectively, may cause the electronic device 401, 1001, 1801 to, based on the first minimum sequence number that is the smallest number among the sequence numbers of the data frames included in the first data frame, a maximum sequence number that is a greatest number among the sequence numbers of the data frames included in the second data frame, and the size of the bitmap included in the first reception acknowledgment frame or the second reception acknowledgment frame, selectively adjust the aggregating level of the third set.

According to an embodiment, the number of data frames aggregated into the third set may be different from the number of data frames aggregated into the first set or the number of data frames aggregated into the second set.

According to an embodiment, an electronic device (e.g., the non-AP MLD 401 of FIG. 4, the electronic device 1001 of FIG. 10, or the electronic device 1801 of FIG. 18) may include at least one wireless communication module (e.g., the wireless communication module 1010 of FIG. 10 and the wireless communication module 1892 of FIG. 18) configured to transmit and receive a wireless signal. The electronic device 401, 1001, 1801 may include at least one processor (e.g., the processor 1020 of FIG. 10 and the processor 1820 of FIG. 18) operatively connected to the wireless communication module 1010, 1892. The electronic device 401, 1001, 1801 may include memory (e.g., the memory 1030 of FIG. 10 or the memory 1830 of FIG. 18) storing instructions. The instructions, when executed by the processor 1020, 1820 individually or collectively, may cause the electronic device 401, 1001, 1801 to receive BA frames respectively over a plurality of links for A-MPDUs transmitted respectively over the plurality of links according to an MLO. The instructions, when executed by the processor 1020, 1820 individually or collectively, may cause the electronic device 401, 1001, 1801 to, based on information included in the BA frames, determine MPDUs that fail to be transmitted or are dropped from transmission among MPDUs aggregated respectively into the A-MPDUs. The instructions, when executed by the processor 1020, 1820 individually or collectively, may cause the electronic device 401, 1001, 1801 to negotiate, with an external electronic device (e.g., the AP MLD 301 of FIG. 3 or the electronic device 1804 of FIG. 18), an aggregating level of an A-MPDU into which the MPDUs that fail to be transmitted or are dropped from transmission are aggregated.

According to an embodiment, each of the BA frames may include a start sequence number of a corresponding A-MPDU and a bitmap indicating a reception state of each of MPDUs aggregated into the corresponding A-MPDU.

According to an embodiment, the instructions, when executed by the processor 1020, 1820 individually or collectively, may cause the electronic device 401, 1001, 1801 to trigger negotiation with the external electronic device 301, 1804 in a situation in which the MPDUs that fail to be transmitted or are dropped from transmission are in a pending state for transmission.

According to an embodiment, the instructions, when executed by the processor 1020, 1820 individually or collectively, may cause the electronic device 401, 1001, 1801 to trigger the negotiation with the external electronic device 301, 1804 when a difference value between minimum sequence numbers of the A-MPDUs is less than a size of a bitmap of the BA frames.

According to an embodiment, the instructions, when executed by the processor 1020, 1820 individually or collectively, may cause the electronic device 401, 1001, 1801 to negotiate the aggregating level by negotiating a buffer size of the external electronic device (e.g., the AP MLD 301 of FIG. 3 or the electronic device 1804 of FIG. 18) through transmission and reception of an ADDBA frame to and from the external electronic device.

The instructions, when executed by the processor 1020, 1820 individually or collectively, may cause the electronic device 401, 1001, 1801 to determine a link for transmitting the A-MPDU.

A link through which the A-MPDU is transmitted may be different from the plurality of links.

According to an embodiment, an electronic device (e.g., the non-AP MLD 401 of FIG. 4, the electronic device 1001 of FIG. 10, or the electronic device 1801 of FIG. 18) may include at least one wireless communication module (e.g., the wireless communication module 1010 of FIG. 10 and the wireless communication module 1892 of FIG. 18) configured to transmit and receive a wireless signal. The electronic device 401, 1001, 1801 may include at least one processor (e.g., the processor 1020 of FIG. 10 and the processor 1820 of FIG. 18) operatively connected to the wireless communication module 1010, 1892. The electronic device 401, 1001, 1801 may include memory (e.g., the memory 1030 of FIG. 10 or the memory 1830 of FIG. 18) storing instructions. The instructions, when executed by the processor 1020, 1820, may cause the electronic device 401, 1001, 1801 to transmit the second set of the data frames over the second link. The instructions, when executed by the processor 1020, 1820, may cause the electronic device 401, 1001, 1801 to receive the first reception acknowledgment frame corresponding to the first set over the first link. The instructions, when executed by the processor 1020, 1820, may cause the electronic device 401, 1001, 1801 to receive the second reception acknowledgment frame corresponding to the second set over the second link. The instructions, when executed by the processor 1020, 1820, may cause the electronic device 401, 1001, 1801 to, in response to receiving the first reception acknowledgment frame and the second reception acknowledgment frame, transmit the third set of data frames. Each of the sequence numbers of the data frames included in the third set may correspond to one of the sequence numbers of the data frames included in the first set and the sequence numbers of the data frames included in the second set.

According to an embodiment, a link through which the third set is transmitted may be different from the first link or the second link.

## Claims

1. An electronic device (401; 1001; 1801) comprising:
at least one wireless communication module (1010; 1892) configured to transmit and receive a wireless signal;
at least one processor (1020; 1820) operatively connected to the wireless communication module (1010; 1892); and
memory (1030; 1830) storing instructions,
wherein the instructions, when executed by the processor (1020; 1820) individually or collectively, cause the electronic device (401; 1001; 1801) to:
receive a first reception acknowledgment frame over a first link for a first set of data frames transmitted over the first link;
receive a second reception acknowledgment frame over a second link for a second set of data frames transmitted over the second link;
based on information comprised in the first reception acknowledgment frame and information comprised in the second reception acknowledgment frame, determine whether there is an overlap between a first data frame that fails to be transmitted or is dropped from transmission in the first set and a second data frame that fails to be transmitted or is dropped from transmission in the second set; and
based on whether there is the overlap, adaptively aggregate the first data frame and the second data frame into a third set of data frames.

2. The electronic device (401; 1001; 1801) of claim 1, wherein
each of data frames comprised in the first set, the second set, and the third set corresponds to a medium access control (MAC) protocol data unit (MPDU) to which a sequence number is assigned,
each of the first set, the second set, and the third set corresponds to an aggregated-MPDU (A-MPDU) into which one or more MPDUs are aggregated, and
each of the first reception acknowledgment frame and the second reception acknowledgment frame corresponds to a block acknowledgment (BA) frame.

3. The electronic device (401; 1001; 1801) of any one of claims 1 and 2, wherein each of the first reception acknowledgment frame and the second reception acknowledgment frame comprises a start sequence number of a corresponding set and a bitmap indicating a reception state of each of data frames aggregated into the corresponding set.

4. The electronic device (401; 1001; 1801) of any one of claims 1 to 3, wherein the instructions, when executed by the processor (1020; 1820) individually or collectively, cause the electronic device (401; 1001; 1801) to, based on a first minimum sequence number that is a smallest number among sequence numbers of data frames comprised in the first data frame, a second minimum sequence number that is a smallest number among sequence numbers of data frames comprised in the second data frame, and a size of a bitmap comprised in the first reception acknowledgment frame or the second reception acknowledgment frame, determine whether there is the overlap.

5. The electronic device (401; 1001; 1801) of any one of claims 1 to 4, wherein whether there is the overlap is defined as a case in which an overlap occurs when a difference value between the second minimum sequence number and the first minimum sequence number is less than the size of the bitmap.

6. The electronic device (401; 1001; 1801) of any one of claims 1 to 5, wherein the instructions, when executed by the processor (1020; 1820) individually or collectively, cause the electronic device (401; 1001; 1801) to trigger a determination of whether there is the overlap in a situation in which the first data frame is in a pending state for transmission and the second data frame is in a pending state for transmission.

7. The electronic device (401; 1001; 1801) of any one of claims 1 to 6, wherein the instructions, when executed by the processor (1020; 1820) individually or collectively, cause the electronic device (401; 1001; 1801) to determine a link for transmitting the third set.

8. The electronic device (401; 1001; 1801) of any one of claims 1 to 7, wherein a link through which the third set is transmitted is different from the first link or the second link.

9. The electronic device (401; 1001; 1801) of any one of claims 1 to 8, wherein the instructions, when executed by the processor (1020; 1820) individually or collectively, cause the electronic device (401; 1001; 1801) to adjust an aggregating level of the third set by negotiating a buffer size of an external electronic device (301; 1804) through transmission and reception of an add BA (ADDBA) frame to and from the external electronic device (301; 1804).

10. The electronic device (401; 1001; 1801) of any one of claims 1 to 9, wherein the instructions, when executed by the processor (1020; 1820) individually or collectively, cause the electronic device (401; 1001; 1801) to, based on the first minimum sequence number that is the smallest number among the sequence numbers of the data frames comprised in the first data frame, a maximum sequence number that is a greatest number among the sequence numbers of the data frames comprised in the second data frame, and the size of the bitmap comprised in the first reception acknowledgment frame or the second reception acknowledgment frame, selectively adjust the aggregating level of the third set.

11. The electronic device (401; 1001; 1801) of any one of claims 1 to 10, wherein a number of data frames aggregated into the third set is different from a number of data frames aggregated into the first set or a number of data frames aggregated into the second set.

12. An electronic device (401; 1001; 1801) comprising:
at least one wireless communication module (1010; 1892) configured to transmit and receive a wireless signal;
at least one processor (1020; 1820) operatively connected to the wireless communication module (1010; 1892); and
memory (1030; 1830) storing instructions,
wherein the instructions, when executed by the processor (1020; 1820) individually or collectively, cause the electronic device (401; 1001; 1801) to:
receive block acknowledgment (BA) frames respectively over a plurality of links for aggregated medium access control (MAC) protocol data units (A-MPDUs) transmitted respectively over the plurality of links according to a multi-link operation (MLO);
based on information comprised in the BA frames, determine MPDUs that fail to be transmitted or are dropped from transmission among MPDUs aggregated respectively into the A-MPDUs; and
negotiate, with an external electronic device (301; 1804), an aggregating level of an A-MPDU into which the MPDUs that fail to be transmitted or
are dropped from transmission are aggregated.

13. The electronic device (401; 1001; 1801) of claim 12, wherein each of the BA frames comprises a start sequence number of a corresponding A-MPDU and a bitmap indicating a reception state of each of MPDUs aggregated into the corresponding A-MPDU.

14. The electronic device (401; 1001; 1801) of any one of claims 12 and 13, wherein the instructions, when executed by the processor (1020; 1820) individually or collectively, cause the electronic device (401; 1001; 1801) to trigger negotiation with the external electronic device (301; 1804) in a situation in which the MPUDs that fail to be transmitted or are dropped from transmission are in a pending state for transmission.

15. The electronic device (401; 1001; 1801) of any one of claims 12 to 14, wherein the instructions, when executed by the processor (1020; 1820) individually or collectively, cause the electronic device (401; 1001; 1801) to trigger the negotiation with the external electronic device (301; 1804) when a difference value between minimum sequence numbers of the A-MPDUs is less than a size of a bitmap of the BA frames.
